# EUROPÄISCHE PATENTSCHRIFT

(11) **EP 3 510 292 B1**
(45) Veröffentlichungstag und Bekanntmachung des Hinweises auf die Patenterteilung: **13.05.2020**
(21) Anmeldenummer: 17768398.4
(22) Anmeldetag: 06.09.2017
(51) Int. Cl.: F16D 13/70, F16D 25/0638, F16D 48/02

(54) **VERFAHREN ZUR ANSTEUERUNG EINER KUPPLUNGSVORRICHTUNG**
METHOD FOR THE ACTUATION OF A CLUTCH DEVICE
PROCÉDÉ DE COMMANDE DE DISPOSITIF D'EMBRAYAGE

(30) Priorität: 09.09.2016 DE 102016217253
(43) Veröffentlichungstag der Anmeldung: 17.07.2019
(73) Patentinhaber: thyssenkrupp Marine Systems GmbH, 24143 Kiel (DE); thyssenkrupp AG, 45143 Essen (DE)
(72) Erfinder: BUESCHER, Max, 52062 Aachen (DE); STOLLEY, Jens, 24782 Büdelsdorf (DE)
(74) Vertreter: thyssenkrupp Intellectual Property GmbH
(86) Internationale Anmeldenummer: PCT/EP2017/072359
(87) Internationale Veröffentlichungsnummer: WO 2018/046544

(56) Entgegenhaltungen:
- DE-A1- 10 224 106
- DE-A1-102013 017 226
- DE-A1-102016 102 122
- JP-A- 2008 089 065

## Beschreibung

Die Erfindung betrifft ein Verfahren zur Ansteuerung einer Kupplungsvorrichtung zum Antreiben einer in einem Außenbereich eines Wasserfahrzeugs angeordneten Betriebseinrichtung, insbesondere einer Ankerwinde, um eine Drehachse A, mit einem Kupplungseingangsteil und einem Kupplungsausgangsteil, wobei das Kupplungseingangsteil mit dem Kupplungsausgangsteil zur Übertragung eines Drehmoments über ein Lamellenpaket antriebsmäßig verbindbar ist, einer Einrückmechanik mit einer Andruckplatte, einer Gegendruckplatte und einer hydraulischen Axialverstellvorrichtung, wobei das Lamellenpaket eingangsseitig angeordnete erste Lamellen und ausgangsseitig angeordnete zweite Lamellen aufweist und axial zwischen der Andruckplatte und der Gegendruckplatte angeordnet ist und die Andruckplatte über die Axialverstellvorrichtung zwischen einer das Lamellenpaket freigebenden ersten Schaltstellung und einer das Lamellenpaket beaufschlagenden zweiten Schaltstellung axial entlang der Drehachse A verschiebbar ist.

Derartige Kupplungsvorrichtungen sind in vielfältigen Anordnungen und Anwendungen bekannt, bei denen das Erfordernis besteht, einen Kraftflusspfad bedarfsweise zu schalten oder zu unterbrechen. Hier sind beispielsweise die Kupplungseinrichtungen wie sie in der DE 100 04 179 A1 und der DE 1 207 727 A beschrieben sind zu nennen.

DE102016102122A1 zeigt ein Verfahren zur Ansteuerung einer Kupplungsvorrichtung.

Bei der vorliegenden Anwendung der Kupplungsvorrichtung handelt es sich um eine Ankerwinde im Bereich eines Wasserfahrzeugs, wobei hier insbesondere auf ein Unterseeboot abgestellt wird. Die Ankerwinde umfasst hierbei zumindest einen Antriebsmotor, der hydraulisch oder auch elektrisch angetriebenen sein kann, und im Kraftfluss zu dem Anker eine Kupplungsvorrichtung. Hierbei besteht ein Erfordernis darin, zu jedem Zeitpunkt den Kraftflusspfad von dem Antriebsmotor zu dem Anker schließen zu können. Weiterhin ist insbesondere bei einem getauchten Unterseeboot der hydrostatische Wasserdruck zu berücksichtigen, so dass die Kupplungsvorrichtung im Bereich eines Gehäuses gegen diesen hydrostatischen Wasserdruck abgedichtet sein muss. Dies ist auch vor dem Hintergrund wichtig, dass Ankerwinden und damit die entsprechenden Kupplungsvorrichtungen in der Regel geringe Betriebszeiten haben und gleichzeitig langen Stillstandszeiten ausgesetzt sind. Ein Eindringen von salzhaltigem Seewasser ist somit zu jeder Zeit zu vermeiden.

Ausgehend hiervon besteht die Aufgabe der vorliegenden Erfindung darin, ein Verfahren zur Ansteuerung einer Kupplungsvorrichtung bereitzustellen, die in der Lage ist, dem hydrostatischen Wasserdruck standzuhalten und die eine sofortige Betriebsfähigkeit auch bei langen Stillstandzeiten gewährleistet.

Die Aufgabe wird gelöst durch das erfindungsgemäße Ansteuerungsverfahren einer Kupplungsvorrichtung zum Antreiben einer in einem Außenbereich eines Wasserfahrzeugs angeordneten Betriebseinrichtung, insbesondere einer Ankerwinde, um eine Drehachse A, umfassend ein Kupplungseingangsteil und ein Kupplungsausgangsteil,
wobei das Kupplungseingangsteil mit dem Kupplungsausgangsteil zur Übertragung eines Drehmoments über ein Lamellenpaket antriebsmäßig verbindbar ist,
eine Einrückmechanik mit einer Andruckplatte, einer Gegendruckplatte und einer hydraulischen Axialverstellvorrichtung,
wobei das Lamellenpaket eingangsseitig angeordnete erste Lamellen und ausgangsseitig angeordnete zweite Lamellen aufweist und axial zwischen der Andruckplatte und der Gegendruckplatte angeordnet ist und
die Andruckplatte über die Axialverstellvorrichtung zwischen einer das Lamellenpaket freigebenden ersten Schaltstellung und einer das Lamellenpaket beaufschlagenden zweiten Schaltstellung axial entlang der Drehachse A verschiebbar ist,
wobei die Axialverstellvorrichtung in der ersten Schaltstellung entgegengesetzte Seiten der Andruckplatte entlang der Drehachse A mit einem hydraulischen Druck p_{hydr} beaufschlagt und in der zweiten Schaltstellung die Andruckplatte mit einer hydraulischen Druckdifferenz p_{delta} = p_{hydr} - p_{redu} zwischen den entgegengesetzten Seiten der Andruckplatte beaufschlagt.

Mit dem erfindungsgemäßen Ansteuerungsverfahren einer Kupplungsvorrichtung ist es möglich innerhalb der Kupplungsvorrichtung eine hydraulische Vorspannung zu erzeugen. Hierbei sind die Drücke, die die hydraulische Vorspannung erzeugen, zu jeder Zeit und überall größer als ein zu erwartender hydrostatischer Wasserdruck, der beispielsweise bei einem getauchten Unterseeboot der umgebende Wasserdruck bei einer maximalen Tauschtiefe sein kann. Erfindungsgemäß ist nun vorgesehen, dass die Andruckplatte der Kupplungsvorrichtung in ihrem ausgerückten Zustand, welcher als erste Schaltstellung bezeichnet wird, beidseitig mit einem oberen Hydraulikdruck p_{hydr} beaufschlagt wird. Dieser obere Hydraulikdruck p_{hydr} ist jedenfalls oberhalb eines umgebenden hydrostatischen Wasserdrucks p_{hydrostat}. Hierdurch ist gewährleistet, dass der Wasserdruck p_{hydrostat} niemals ausreichend ist, Umgebungswasser in die Kupplungsvorrichtung reinzudrücken. Bevorzugt weist die Kupplungsvorrichtung ein druckfestes Gehäuse auf beziehungsweise ist in einem solchen aufgenommen. Erfindungsgemäß ist nun weiterhin vorgesehen, dass der eingerückte Zustand, welcher als zweite Schaltstellung bezeichnet wird, dadurch hergestellt wird, dass der Hydraulikdruck auf der Abtriebsseite der Andruckplatte von dem oberen Wert p_{hydr} auf einen reduzierten Wert p_{redu} reduziert wird, wobei dieser Druckwert p_{redu} allerdings weiterhin gleich oder größer dem hydrostatischen Wasserdruck p_{hydrostat} ist. Die zur Verfügung stehende Druckdifferenz p_{delta} ergibt sich aus der Differenz zwischen den Hydraulikdruck p_{hydr} und dem hydrostatischen Wasserdruck p_{hydrostat}.

Eine vorteilhafte Ausgestaltung der Erfindung sieht vor, dass die Axialverstellungvorrichtung weiterhin Federmittel umfasst, die die Andruckplatte in die erste Schaltstellung beaufschlagen. Durch diese in Richtung eines Öffnens wirkende Lüftfeder ist ein stabiler Zustand der Einrückmechanik in dem ersten Schaltzustand gewährleistet und es wird das in Reibkupplungen auftretende Schleppmoment reduziert.

Eine vorteilhafte Ausgestaltung der Erfindung sieht vor, dass die Axialverstellungvorrichtung weiterhin Ringkolbenelemente umfasst, die jeweils die entgegengesetzten Seiten der Andruckplatte mittelbar beaufschlagen. Durch die Ringkolbenelemente wird erreicht, dass die Andruckplatte beidseitig eingespannt wird, so dass über die Ringkolbenelemente eine axiale Bewegung auf die Andruckplatte übertragen werden kann.

Eine vorteilhafte Ausgestaltung der Erfindung sieht vor, dass die Einrückmechanik von dem Kupplungseingangsteil aufgenommen ist. Hierdurch ergibt sich eine kompakte Bauform des Kupplungseingangsteils.

Eine vorteilhafte Ausgestaltung der Erfindung sieht vor, dass die Gegendruckplatte unbeweglich bezüglich des Kupplungseingangsteils angeordnet ist. Hierdurch wird die Beaufschlagungskraft, die durch die Axialverstellvorrichtung in der zweiten Schaltstellung aufgebracht wird, lediglich innerhalb des Kupplungseingangsteils wirksam und muss nicht gegenüber einem anderen Bauteil abgestützt werden.

Die Aufgabe wird erfindungsgemäß gelöst durch ein Verfahren zur Ansteuerung einer Kupplungsvorrichtung wie zuvor beschrieben, mit den Schritten:
- Vorgeben eines Wertes p_{Umg} eines Umgebungsdrucks, insbesondere eines umgebenden Wasserdrucks p_{hydrostat},
- Einstellen eines Wertes p_{hydr} eines hydraulischen Drucks einer hydraulischen Anlage des Wasserfahrzeugs oberhalb des Druckwerte p_{umg}, insbesondere p_{hydrostat},
- Beaufschlagen der entgegengesetzten Seiten der Andruckplatte über die Axialverstellvorrichtung mit dem Wert p_{hydr} des hydraulischen Drucks, zur Einnahme der ersten Schaltstellung der Andruckplatte,
- Reduzieren des Werts p_{hydr} des hydraulischen Drucks auf der der Gegendruckplatte zugewandten Seite der Andruckplatte auf einen reduzierten Wert p_{redu} eines hydraulischen Drucks oberhalb des Druckwertes p_{umg}, insbesondere p_{hydrostat}, zur Einnahme der zweiten lung der Andruckplatte.

Durch das erfindungsgemäße Verfahren ist es möglich die Andruckplatte beidseitig einzuspannen und damit zu fixieren. Weiterhin ist es möglich die Andruckplatte einseitig mit Druck zu beaufschlagen, so dass hierdurch eine Druckdifferenz entsteht, die zu einer axialen Bewegung der Andruckplatte führt, um diese hierdurch in die zweite Schaltstellung zu überführen.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
Figur 1 ein Unterseeboot mit einer Ankerwinde;
Figur 2 eine prinzipielle Darstellung einer Kupplungsvorrichtung für das erfindungsgemäße Verfahren und
Figur 3 einen schematischen Ablauf eines erfindungsgemäßen Verfahrens zur Ansteuerung einer Kupplungsvorrichtung.

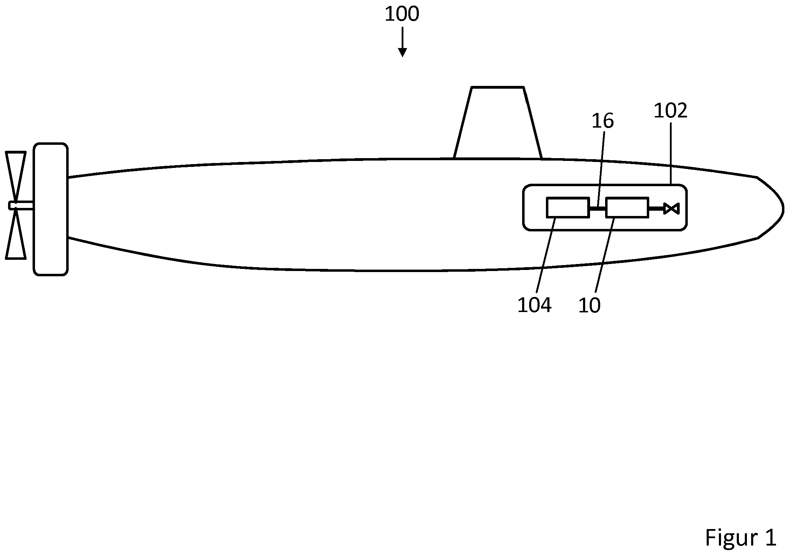

Die Figur 1 zeigt schematisch ein Unterseeboot 100, das ein möglicher Anwendungsbereich für die erfindungsgemäße Kupplungsvorrichtung 10 sein kann. Vorliegend kann im Außenschiffsbereich des Unterseebootes eine Ankerwinde 102 zum Antrieb eines Ankers vorgesehen sein. Die Ankerwinde 102 umfasst hierbei einen hydraulischen oder elektrischen Antriebsmotor 104 und die in Richtung Anker angeordnete Kupplungsvorrichtung 10, um in jedem Zeitpunkt einen einrückbaren Kraftfluss realisieren zu können. Auf die Darstellung der Ankerleine und des Ankers ist aus Darstellungsgründen verzichtet worden.

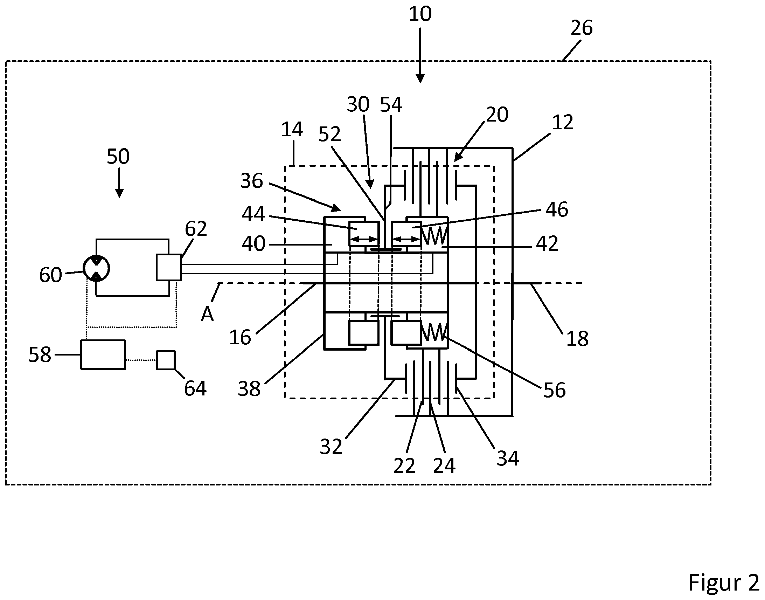

Die Figur 2 zeigt eine Prinzipdarstellung einer Kupplungsvorrichtung 10 für das erfindungsgemäße Verfahren, die schematisch betrachtet aus einem Kupplungseingangsteil 14 und einem Kupplungsausgangsteil 12 besteht und um eine Drehachse A drehbar ist. Verallgemeinert können Kupplungseingangsteil und Kupplungsausgangsteil auch als Schnittstellen der Kupplungsvorrichtung 10 bezeichnet werden, über die, je nach Richtung, ein Drehmoment eingekoppelt beziehungsweise ausgekoppelt werden kann. Die Kupplungsvorrichtung 10 ist in einem druckfesten Gehäuse 26 untergebracht. Hierbei kann das Gehäuse 26 auch gleichzeitig zumindest teilweise ein Gehäuse der Ankerwinde 102 darstellen.

Für die Zwecke dieser Beschreibung wird davon ausgegangen, dass das Kupplungseingangsteil 14 von einer Antriebswelle 16 über ein Antriebsmoment angetrieben werden kann und das Kupplungsausgangsteil 12 das übertragene Drehmoment über eine Abtriebswelle 18 abgibt. Zur Übertragung des Drehmoments ist zwischen dem Kupplungseingangsteil 14 und dem Kupplungsausgangsteil 12 ein Lamellenpaket 20 mit eingangsseitig angeordneten ersten Lamellen 22 und ausgangsseitig angeordneten zweiten Lamellen 24 vorgesehen. Die ersten und zweiten Lamellen 22, 24 sind jeweils bezüglich des Kupplungseingangsteils 14 und dem Kupplungsausgangsteil 12 drehfest und axial beweglich entlang der Drehachse A gehalten. Bevorzugt sind die ersten und zweiten Lamellen 22, 24 aus einem metallischen Material mit einem austenitischen Gefüge hergestellt. Beispielsweise kann ein austenitischer Stahl vorgesehen sein. Weiterhin ist in einer bevorzugten Ausgestaltung vorgesehen, dass auf den austenitischen Stahl ein organischer Reibbelag aufvulkanisiert ist. Auch kann zwischen dem Gehäuse 26 und den ersten und zweiten Lamellen 22, 24 der Kupplungsvorrichtung 10 in geeigneter eine Dichtungsanordnung vorgesehen sein, um Korrosion zwischen den Lamellen 22, 24 und dem Gehäuse 26 zu verhindern.

Eine Betätigung beziehungsweise ein Zustellen des Lamellenpakets 20 zur Übertagung eines Drehmoments erfolgt über eine Einrückmechanik 30, die vorliegend dem Kupplungseingangsteil 14 zugeordnet sein kann. Die Einrückmechanik 30 umfasst eine Andruckplatte 32, eine Gegendruckplatte 34 und eine hydraulische Axialverstellvorrichtung 36. Das Lamellenpaket 20 ist axial zwischen der Andruckplatte 32 und der Gegendruckplatte 34 angeordnet. Über eine noch zu beschreibende Betätigung durch die Axialverstellvorrichtung 36 können der ersten und zweiten Lamellen 22, 24 gegeneinander beaufschlagt werden, so dass ein Drehmoment über das Lamellenpaket 20 von dem Kupplungseingangsteil 14 auf das Kupplungsausgangsteil 12 übertragen werden kann. Während die Gegendruckplatte 34 unbeweglich bezüglich des Kupplungseingangsteils 14 angeordnet ist, ist die Andruckplatte 32 axial verschiebbar gegenüber dem Kupplungseingangsteil 14 gehalten. Bevorzugt ist vorgesehen, dass die Andruckplatte 32 über die Axialverstellvorrichtung 36 in axialer Richtung betätigt werden kann, so dass über diese Betätigung die Andruckplatte 32 auf die Gegendruckplatte 34 zu beaufschlagt werden kann, um das Lamellenpaket 20 zuzustellen.

Die Axialverstellvorrichtung 36 umfasst eine Ringkolbenaufnahme 38, die unverdrehbar auf der Antriebswelle 16 gehalten ist, beispielsweise über eine Längsverzahnung. In die Ringkolbenaufnahme 38 ist mittig in radialer Richtung die Andruckplatte 32 hereingeführt und dort gelagert. Zu entgegengesetzten Seiten der Andruckplatte 32, in axialer Richtung betrachtet, sind in Kolbenkammern 40 und 42 der Ringkolbenaufnahme 38 jeweils Ringkolbenelemente 44 und 46 aufgenommen. Die Ringkolbenelemente 44, 46 können in den Ringkolbenkammern 40, 42 eine axiale Bewegung ausführen, was durch den jeweiligen Doppelpfeil symbolisiert ist. Weiterhin ist eine hydraulische Druckölanlage 50 vorgesehen, die vorliegend lediglich schematisch dargestellt ist. Die Druckölanlage 50 kann Teil einer Hydraulikanlage des Unterseebootes 100 sein. Auch ist eine Steuereinheit 58 vorgesehen, welche über Signalleitungen zumindest mit einer Hydraulikpumpe 60, einem Regelventil 62 und einem Drucksensor 64 verbunden ist, wobei der Drucksensor 64 zur Messung eines hydrostatischen Wasserdruck p_{hydrostat} ausgelegt ist. Die Druckölanlage 50 ist in der Lage die Kolbenkammern 40, 42 unabhängig voneinander mit einem Hydraulikdruck p_{hydr} zu beaufschlagen. Beaufschlagt die Druckölanlage beide Kolbenkammern 40, 42 gleichermaßen mit einem Hydraulikdruck p_{hydr}, herrscht ein Kräftegleichgewicht zwischen den entgegengesetzten Seiten 52 und 54 der Andruckplatte 32. In diesem Zustand befindet sich das Lamellenpaket 20 in der freigegebenen ersten Schaltstellung, in der kein Drehmoment übertragen werden kann. Insbesondere kann vorgesehen sein, dass in der Ringkolbenkammer 42 ein Federelement 56 angeordnet ist, das über die Andruckplatte 32 das Lamellenpaket 20 in Richtung einer weiteren Freigabe beaufschlagt, so dass das Schleppmoment in der erste Schaltstellung reduziert wird.

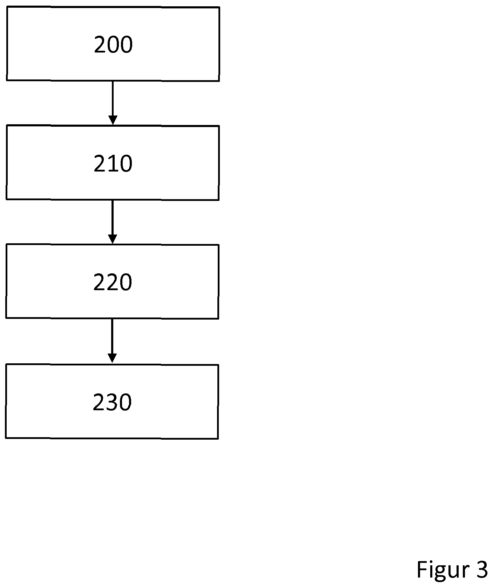

Die Figur 3 zeigt eine Ausgestaltung des erfindungsgemäßen Verfahrens. In dem Verfahrensschritt 200 wird ein Wert p_{Umg} eines Umgebungsdrucks, insbesondere eines umgebenden Wasserdrucks p_{hydrostat}, vorgegeben. Durch den Wert p_{Umg} wird eine untere Druckgrenze für die Kupplungsvorrichtung 10 festgelegt. In Verfahrensschritt 210 wird ein Wert p_{hydr} eines hydraulischen Drucks der hydraulischen Anlage 50 des Wasserfahrzeugs 100 oberhalb des Druckwertes p_{umg}, insbesondere des Wasserdrucks p_{hydrostat}, eingestellt. In Verfahrensschritt 220 werden die entgegengesetzten Seiten 52, 54 der Andruckplatte 32 über die Axialverstellvorrichtung 36 mit dem Wert p_{hydr} des hydraulischen Drucks beaufschlagt, zur Einnahme der ersten Schaltstellung der Andruckplatte. In Verfahrensschritt 230 wird der Wert p_{hydr} des hydraulischen Drucks auf der der Gegendruckplatte 34 zugewandten Seite der Andruckplatte 32 auf einen reduzierten Wert p_{redu} eines hydraulischen Drucks oberhalb des Druckwertes p_{Umg} reduziert, insbesondere p_{hydrostat}, zur Einnahme der zweiten Schaltstellung der Andruckplatte 32.

### Bezugszeichenliste

- 10: Kupplungsvorrichtung
- 12: Kupplungsausgangsteil
- 14: Kupplungseingangsteil
- 16: Antriebswelle
- 18: Abtriebswelle
- 20: Lamellenpaket
- 22: Lamellen
- 24: Lamellen
- 26: Gehäuse
- 30: Einrückmechanik
- 32: Andruckplatte
- 34: Gegendruckplatte
- 36: Axialverstellvorrichtung
- 38: Ringkolbenaufnahme
- 40: Kolbenkammer
- 42: Kolbenkammer
- 44: Ringkolbenelement
- 46: Ringkolbenelement
- 50: Druckölanlage
- 52: Stirnseite
- 54: Stirnseite
- 56: Federelement
- 58: Steuereinheit
- 60: Hydraulikpumpe
- 62: Regelventil
- 64: Drucksensor
- 100: Wasserfahrzeug
- 102: Ankerwinde
- 104: Antriebsmotor

## Patentansprüche

1. Verfahren zur Ansteuerung einer Kupplungsvorrichtung (10) zum Antreiben einer in einem Außenbereich eines Wasserfahrzeugs (100) angeordneten Betriebseinrichtung, insbesondere einer Ankerwinde (104), um eine Drehachse A, umfassend ein Kupplungseingangsteil (14) und ein Kupplungsausgangsteil (12),
wobei das Kupplungseingangsteil (14) mit dem Kupplungsausgangsteil (12) zur Übertragung eines Drehmoments über ein Lamellenpaket (20) antriebsmäßig verbindbar ist,
eine Einrückmechanik (30) mit einer Andruckplatte (32), einer Gegendruckplatte (34) und einer hydraulischen Axialverstellvorrichtung (36),
wobei das Lamellenpaket (20) eingangsseitig angeordnete erste Lamellen (22) und ausgangsseitig angeordnete zweite Lamellen (24) aufweist und axial zwischen der Andruckplatte (32) und der Gegendruckplatte (34) angeordnet ist und
die Andruckplatte (32) über die Axialverstellvorrichtung (36) zwischen einer das Lamellenpaket (20) freigebenden ersten Schaltstellung und einer das Lamellenpaket (20) beaufschlagenden zweiten Schaltstellung axial entlang der Drehachse A verschiebbar ist, mit den Verfahrensschritten:
- Vorgeben eines Wertes p_{Umg} eines Umgebungsdrucks, insbesondere eines umgebenden Wasserdrucks p_{hydrostat},
- Einstellen eines Wertes p_{hydr} eines hydraulischen Drucks einer hydraulischen Anlage (50) des Wasserfahrzeugs (100) oberhalb des Druckwertes p_{umg}, insbesondere des Wasserdrucks p_{hydrostat},
- Beaufschlagen der entgegengesetzten Seiten (52, 54) der Andruckplatte (32) über die Axialverstellvorrichtung (36) mit dem Wert p_{hydr} des hydraulischen Drucks, zur Einnahme der ersten Schaltstellung der Andruckplatte,
- Reduzieren des Werts p_{hydr} des hydraulischen Drucks auf der der Gegendruckplatte (34) zugewandten Seite der Andruckplatte (32) auf einen reduzierten Wert p_{redu} eines hydraulischen Drucks oberhalb oder gleich des Druckwertes p_{umg}, insbesondere oberhalb oder gleich des hydrostatischen Druckwertes p_{hydrostat}, zur Einnahme der zweiten Schaltstellung der Andruckplatte (32).

2. Verfahren nach Anspruch 1, **dadurch gekennzeichnet, dass** der Wert p_{hydr} des hydraulischen Drucks derart eingestellt ist, dass er mindestens um einen Differenzdruck p_{delta} höher ist als der hydrostatische Druckwert p_{hydrostat}, bei vorgegebener maximaler Tauchtiefe des Wasserfahrzeug (100).

3. Verfahren nach Anspruch 1 oder 2, **dadurch gekennzeichnet, dass** der hydrostatische Druckwert p_{hydrostat} gemessen wird und der Wert p_{hydr} des hydraulischen Drucks in Abhängigkeit des gemessenen hydrostatischen Druckwertes p_{hydrostat} derart erhöht wird, dass er jeweils mindestens um den Differenzdruck p_{delta} höher ist als der Umgebungsdruck p_{Umg}.

4. Verfahren nach einem der Ansprüche 1 bis 3, **dadurch gekennzeichnet, dass** der vorgegebene Wert p_{Umg} eines Umgebungsdrucks ein über eine Messung erfasster Druckwert ist.

5. Verfahren nach einem der Ansprüche 1 bis 4, bei dem die Axialverstellungvorrichtung (36) weiterhin Federmittel (56) umfasst, die die Andruckplatte (32) in die erste Schaltstellung beaufschlagen.

6. Verfahren nach einem der Ansprüche 1 bis 5, bei dem die Axialverstellungvorrichtung (36) weiterhin Ringkolbenelemente (44, 46) umfasst, die jeweils die entgegengesetzten Seiten (52, 54) der Andruckplatte (32) mittelbar beaufschlagen.

7. Verfahren nach einem der Ansprüche 1 bis 6, bei dem die Einrückmechanik (30) von dem Kupplungseingangsteil (14) aufgenommen ist.

8. Verfahren nach Anspruch 7, bei dem die Gegendruckplatte (34) unbeweglich bezüglich des Kupplungseingangsteils (14) angeordnet ist.

## Claims

1. Method for actuating a clutch apparatus (10) for driving an operating device which is arranged in an exterior region of a watercraft (100), in particular an anchor winch (104), about a rotational axis A, comprising a clutch input part (14) and a clutch output part (12), it being possible for the clutch input part (14) to be drive-connected to the clutch output part (12) for the transmission of a torque via a multiple disc assembly (20),
an engagement mechanism (30) with a pressure plate (32), a counterpressure plate (34) and a hydraulic axial adjusting apparatus (36),
the multiple disc assembly (20) having first multiple discs (22) which are arranged on the input side and second multiple discs (24) which are arranged on the output side, and being arranged axially between the pressure plate (32) and the counterpressure plate (34), and
it being possible for the pressure plate (32) to be displaced axially along the rotational axis A via the axial adjusting apparatus (36) between a first switching position which releases the multiple disc assembly (20) and a second switching position which loads the multiple disc assembly (20),
having the method steps:
- specifying of a value p_{Umg} of a surrounding pressure, in particular a surrounding water pressure p_{hydrostat},
- setting of a value p_{hydr} of a hydraulic pressure of a hydraulic system (50) of the watercraft (100) above the pressure value p_{Umg}, in particular the water pressure p_{hydrostat},
- loading of the opposite sides (52, 54) of the pressure plate (32) via the axial adjusting apparatus (36) with the value p_{hydr} of the hydraulic pressure, in order to assume the first switching position of the pressure plate,
- reducing of the value p_{hydr} of the hydraulic pressure on that side of the pressure plate (32) which faces the counterpressure plate (34) to a reduced pressure p_{redu} of a hydraulic pressure above or equal to the pressure value p_{Umg}, in particular above or equal to the hydrostatic pressure value P_{hydrostat}, in order to assume the second switching position of the pressure plate (32).

2. Method according to Claim 1, **characterized in that** the value p_{hydr} of the hydraulic pressure is set in such a way that it is higher than the hydrostatic pressure value p_{hydrostat} at least by a pressure difference p_{delta} in the case of a predefined maximum dive depth of the watercraft (100).

3. Method according to Claim 1 or 2, **characterized in that** the hydrostatic pressure value p_{hydrostat} is measured, and the value p_{hydr} of the hydraulic pressure is increased in a manner which is dependent on the measured hydrostatic pressure value p_{hydrostat} in such a way that it is higher than the surrounding pressure p_{Umg} in each case at least by the differential pressure p_{delta}.

4. Method according to one of Claims 1 to 3, **characterized in that** the predefined value p_{Umg} of a surrounding pressure is a pressure value which is detected via a measurement.

5. Method according to one of Claims 1 to 4, in the case of which the axial adjusting apparatus (36) comprises, furthermore, spring means (56) which load the pressure plate (32) into the first switching position.

6. Method according to one of Claims 1 to 5, in the case of which the axial adjusting apparatus (36) comprises, furthermore, annular piston elements (44, 46) which in each case load the opposite sides (52, 54) of the pressure plate (32) indirectly.

7. Method according to one of Claims 1 to 6, in the case of which the engagement mechanism (30) is received by the clutch input part (14).

8. Method according to Claim 7, in the case of which the counterpressure plate (34) is arranged such that it cannot be moved with regard to the clutch input part (14) .

## Revendications

1. Procédé de commande d'un dispositif d'accouplement (10) destiné à entraîner un moyen de manœuvre, en particulier un guindeau (104), disposé dans une région extérieure d'un engin nautique (100), sur un axe de rotation A, ledit dispositif d'accouplement comprenant une partie d'entrée d'accouplement (14) et une partie de sortie d'accouplement (12),
la partie d'entrée d'accouplement (14) pouvant être reliée en entraînement à la partie de sortie d'accouplement (12) pour transmettre un couple par le biais d'un ensemble de disques (20),
un mécanisme d'engagement (30) pourvu d'une plaque de pression (32), d'une plaque de pression antagoniste (34) et d'un dispositif de déplacement axial hydraulique (36),
l'ensemble de disques (20) comportant des premiers disques (22) disposés côté entrée et des deuxièmes disques (24) disposés côté sortie et étant disposé axialement entre la plaque de pression (32) et la plaque de pression antagoniste (34) et
la plaque de pression (32) pouvant être déplacée axialement le long de l'axe de rotation A par le biais du dispositif de déplacement axial (36) entre une première position de commutation libérant l'ensemble de disques (20) et une deuxième position de commutation agissant sur l'ensemble de disques (20),
le procédé comprenant les étapes suivantes :
- spécifier une valeur p_{Amb} d'une pression ambiante, en particulier d'une pression d'eau ambiante p_{hydrostat},
- régler une valeur p_{hydr} d'une pression hydraulique d'un système hydraulique (50) de l'engin nautique (100) au-dessus de la valeur de pression p_{Amb}, en particulier de la pression d'eau p_{hydrostat},
- agir sur les côtés opposés (52, 54) de la plaque de pression (32) par le biais du dispositif de déplacement axial (36) avec la valeur p_{hydr} de la pression hydraulique pour prendre la première position de commutation de la plaque de pression,
- réduire la valeur p_{hydr} de la pression hydraulique, du côté de la plaque de pression (32) dirigé vers la plaque de pression antagoniste (34), à une valeur réduite p_{rédu} d'une pression hydraulique supérieure ou égale à la valeur de pression p_{Amb}, notamment supérieure ou égale à la valeur de pression hydrostatique p_{hydrostat} pour prendre la deuxième position de commutation de la plaque de pression (32).

2. Procédé selon la revendication 1, **caractérisé en ce que** la valeur p_{hydr} de la pression hydraulique est réglée de manière à être supérieure d'au moins une pression différentielle p_{delta} à la valeur de pression hydrostatique p_{hydrostat} à une profondeur de plongée maximale spécifiée de l'engin nautique (100).

3. Procédé selon la revendication 1 ou 2, **caractérisé en ce que** la valeur de pression hydrostatique p_{hydrostat} est mesurée et la valeur p_{hydr} de la pression hydraulique est augmentée en fonction de la valeur de pression hydrostatique mesurée p_{hydrostat} de manière à être supérieure au moins de la pression différentielle p_{delta} à la pression ambiante p_{Amb}.

4. Procédé selon l'une des revendications 1 à 3, **caractérisé en ce que** la valeur spécifiée p_{Amb} d'une pression ambiante est une valeur de pression détectée par le biais d'une mesure.

5. Procédé selon l'une des revendications 1 à 4, dans lequel le dispositif de déplacement axial (36) comprend en outre des moyens à ressort (56) qui agissent sur la plaque de pression (32) pour l'amener dans la première position de commutation.

6. Procédé selon l'une des revendications 1 à 5, dans lequel le dispositif de déplacement axial (36) comprend en outre des éléments de piston annulaires (44, 46) qui agissent chacun indirectement sur les côtés opposés (52, 54) de la plaque de pression (32).

7. Procédé selon l'une des revendications 1 à 6, dans lequel le mécanisme d'engagement (30) est reçu par la partie d'entrée d'accouplement (14).

8. Procédé selon la revendication 7, dans lequel la plaque de pression antagoniste (34) est disposée de manière immobile par rapport à la partie d'entrée d'accouplement (14).
